# EUROPEAN PATENT SPECIFICATION

(11) **EP 1 094 885 B1**
(45) Date of publication and mention of the grant of the patent: **19.11.2003**
(21) Application number: 98901912.0
(22) Date of filing: 06.02.1998
(51) Int. Cl.: B01D 63/02, B01D 63/04, B01D 53/22

(54) **HOLLOW FIBER MEMBRANE CARPET MANUFACTURING METHOD, AN ELEMENTARY HOLLOW FIBER MEMBRANE CARPET MEMBER AND HOLLOW FIBER MEMBRANE CARPET**
VERFAHREN ZUR HERSTELLUNG EINES HOHLFASERMEMBRANTEPPICHS, ELEMENTARE EINHEIT DES HOHLFASERMEMBRANTEPPICHS UND HOHLFASERMEMBRANTEPPICH
PROCEDE DE FABRICATION DE TAPIS A MEMBRANE A FIBRES CREUSES, ELEMENT DE TAPIS A MEMBRANE A FIBRES CREUSES ET TAPIS A MEMBRANE A FIBRES CREUSES

(43) Date of publication of application: 02.05.2001
(73) Proprietor: Anjou Recherche, 78603 Malsons-Lafitte Cedex (FR)
(72) Inventor: ROGUT, Jan, Cincinnati, OH 45219 (US)
(74) Representative: Vidon, Patrice
(86) International application number: CA9800075
(87) International publication number: WO99039811

(56) References cited:
- WO-A-97/33682
- US-A- 5 238 562
- US-A- 5 248 424
- US-A- 5 284 583
- US-A- 5 716 689

## Description

### Technical Field

The present invention generally relates to membrane separation processes employing hollow fiber membrane technology and, more particularly, is concerned with a hollow fiber membrane carpet manufacturing method and with an elementary carpet member and a carpet assembled from a plurality of elementary carpet members.

### Background Art

Processes of fluid separations carried out on membranes, permselective thin layers of polymeric or ceramic materials, belong to the most rapidly developing fields of chemical and environmental technologies. The efficiency of membrane separations depends on process parameters, properties of membrane materials, and the form and geometry of membranes. Hollow fibers, the microtubes with capillary range of diameters, are one of the major forms of membranes. Their production utilizes the know-how and technical hardware of melt or solution spinning methods of the chemical fibers industry. Some ways of producing hollow fiber membranes appear in an article in Gas Separation & Purification, March 1990, Vol. 4, pages 29-36, by P.S. Puri, entitled "Fabrication of hollow fibre gas separation membranes".

Hollow fiber membranes are under broad exploitation in the desalination of sea water (reverse osmosis), gas separation (air separation to oxygen enriched air or to nitrogen enriched air), medicine (artificial kidney) and many other industrial, environmental and agricultural applications. The size of the world market for membrane systems and processes are experiencing a rapid growth of about 15-30% per year. The total market value of products and processes based on membranes is estimated to be on the level of $5 billion by the year 2000.

Hollow fiber membrane technology in textile forms were first disclosed by the inventor in U.S. Pat. Nos. 5,238,562, 5,284,583, 5,328,610 and 5,332,498. These hollow fiber textile forms follow the known classic structures of textiles: hollow fiber knitted textile, hollow fiber curtains, hollow fiber carpets, hollow fiber velours and other similar ones. The inventions of these patents were originated by the inventor herein through the merging of his insights and experiences in the fields of textile and membrane technologies.

Particularly, hollow fiber membrane carpets useful for air separation purposes have been described in detail in the above-cited U.S. Pat. Nos. 5,238,562 and 5,284,583. The technical feasability of these hollow fiber textile forms follows from the experimentally proven possibility of building membrane systems from extremely small hollow fibers, such as with outside diameters from 30 to 50 microns and inside diameters from 10 to 20 microns, without paying the price of causing unacceptably large pressure drops by the flow of raw mixtures or product fluids through small internal channels of capillaries. The known problems of back pressure effects and polarization phenomena in membrane systems have been limited substantially by the use of short hollow fibers, such as with lengths of 1.5 to 25 centimeters.

The most important practical advantage of the hollow fiber textile forms disclosed by these patents derives from their ability to be produced on a large technical scale by conventional textile manufacturing machines through replacement of "normal" fibers with hollow fibers. In this way, the capital costs for manufacturing hollow fiber membrane systems can be decreased significantly making these membrane systems low cost but high quality and thereby more competitive in a broader range of applications.

However, notwithstanding the substantial potential benefits to be derived particularly from the new hollow fiber membrane carpet forms, the inventor herein has faced substantial resistance from manufacturers to undertaking production on a large scale basis without first having confirmation of these benefits from actual uses. Thus, there is a need for further innovations in the design and manufacture of hollow fiber membrane carpets so as to bring them into practical use so that their benefits can be conclusively demonstrated and realized.

WO97/33682 discloses a method of manufactoring a hollow fiber membrane device according to which a concentric radial flow hollow fiber module is built.

### Disclosure of Invention

The present invention provides a hollow fiber membrane carpet manufacturing method and an elementary carpet member and carpet assembled from a plurality of the elementary carpet members. The carpet manufacturing method of the present invention permits production of a hollow fiber membrane carpet in an automated fashion on a technical scale that is flexible and thus adaptable to the needs and requirements of any given application. At the core of the manufacturing method of the present invention is a modular approach to carpet production that facilitates its adaptability to specific user requirements and needs. The modularity of the approach relates to the elementary carpet members that are manufactured and assembled together by the method of the present invention to provide a hollow fiber membrane carpet having a desired size and configuration tailored particularly to a desired application. This modular approach promotes a high flexibility and adaptability in hollow fiber membrane carpet production which could not be realized by using conventional industrial carpet manufacturing machines and methods without costly modifications.

Accordingly, the present invention is directed to a method of manufacturing a hollow fiber membrane carpet, comprising the steps of: (a) laying out a multiplicity of hollow membrane fibers; (b) forming a pair of strips of non-permeable adhesive material on the hollow fibers in a transverse relationship thereto and in a spaced relationship from one another such that main portions of the hollow fibers extend between the spaced strips; (c) cutting selected portions of the hollow fibers adjacent to the spaced strips so as to open the hollow fibers to communication at least at one of a pair of opposite end portions of the hollow fibers; and (d) assembling the hollow fibers and spaced strips into a hollow fiber membrane carpet. The assembling of the carpet is performed by (i) bringing and attaching the strips together in a side-by-side relationship to one another so as to form elementary carpet members each having an elongated base element formed by the attached strips and a multiplicity of loops formed by the main portions of the hollow fibers extending from the opposite end portions thereof supported in the base element of the elementary carpet member, and (ii) positioning together the elementary carpet members to form the hollow fiber membrane carpet by attaching in side-by-side relationships to one another the base elements of adjacent elementary carpet members to form a support base of the hollow fiber membrane carpet with the hollow fiber loops of the elementary carpet members extending outwardly from one side of the support base.

More particularly, the bringing of the strips together includes offsetting the strips in opposite directions from one another along their longitudinal extents prior to attaching the strips together in the side-by-side relationship. The offsetting of the strips longitudinally relative to one another bends the hollow fibers extending between the strips so as to provide a multiplicity of loops which overlap one another and extend in planes disposed at small acute angles to the longitudinal extents of the strips.

In one form, the support base of the hollow fiber membrane carpet is provided in a generally flat or curved configuration with the loops of hollow fibers extending outwardly from one side of the support base and the opposite end portions of the hollow fibers being open at the opposite side of the support base. In another form, the support base of the hollow fiber membrane carpet is provided in an annular configuration with the loops of hollow fibers extending outwardly from an outside of the annular support base and the end portions of the hollow fibers being open at the inside of the annular support base.

The carpet manufacturing method further comprises applying a pair of elongated strengthening elements across the selected adjacent portions of said hollow fibers in a transverse relationship thereto and in a spaced relationship from one another prior to forming the pair of strips of non-permeable adhesive material to thereby encapsulate the strengthening elements with the selected adjacent portions of the hollow fibers by the strips such that the strengthening elements extend longitudinally through the respective strips. The strengthening elements may be applied by interweaving them between bunches of the hollow fibers. The carpet manufacturing method also comprises coordinating the laying out of the hollow fibers with the applying of the strips to provide segments of the strips free of hollow fibers and that bridge gaps between the hollow fibers such that these segments of the strips can define means for attaching the carpet to external support members. The carpet manufacturing method still further comprises profiling the strips by forming complementary matable interfitting elements on opposite sides thereof so that the strips can be attached to one another to form the elementary carpet member and then the elementary carpet members can be attached to one another to form the hollow fiber membrane carpet.

The present invention also is directed to an elementary carpet member for use in forming a hollow fiber membrane carpet. The elementary carpet member comprises: (a) a pair of strips of non-permeable adhesive material being positioned lengthwise adjacent to one another; (b) means for attaching the strips to one another in a side-by-side relationship to form an elongated base element; and (c) a multiplicity of hollow membrane fibers each having a tubular wall with a pair of spaced opposite end portions and a main portion interconnecting the opposite end portions, the opposite end portions of each of the hollow fibers being supported in respective ones of the strips and extending therefrom through surfaces of the strips disposed side-by-side one another and extending in substantially the same plane, the elongated main portions of the hollow fibers being bent so as to form a multiplicity of loops extending outwardly from a side of the elongated base element formed by the surfaces of the strips.

The present invention further is directed to a hollow fiber membrane carpet which comprises: (a) a plurality of elementary carpet members, each member including (i) a pair of strips of non-permeable adhesive material being positioned lengthwise adjacent to one another, (ii) means for attaching the strips to one another in a side-by-side relationship to form an elongated base element, and (iii) a multiplicity of hollow membrane fibers each having a tubular wall with a pair of spaced opposite end portions and a main portion interconnecting the opposite end portions, the opposite end portions of each of the hollow fibers being supported in respective ones of the strips and extending therefrom through surfaces of the strips disposed side-by-side one another and extending in substantially the same plane, the elongated main portions of the hollow fibers being bent so as to form a multiplicity of loops extending outwardly from a side of the elongated base element of the elementary carpet member formed by the surfaces of the strips; and (b) means for attaching the base elements of the elementary carpet members to one another in a side-by-side relationship to form an elongated support base of a hollow fiber membrane carpet with the hollow fiber loops extending outwardly from a side of the support base.

These and other features and advantages of the present invention will become apparent to those skilled in the art upon a reading of the following detailed description when taken in conjunction with the drawings wherein there is shown and described an illustrative embodiment of the invention.

### Brief Description of the Drawings

In the following detailed description, reference will be made to the attached drawings in which:
Fig. 1 is a block diagram of the hollow fiber membrane carpet manufacturing method in accordance with the present invention.
Figs. 2A, 2B and 2C are schematic diagrams of the steps of the method involving the manufacturing of elementary carpet members and of the assembling of a hollow fiber membrane carpet therefrom.
Fig. 3 is a cross-sectional view taken along lines 3--3 of Figs. 2B and 2C showing the spaced strips and hollow fibers extending therebetween before being brought together to make either of two forms of the elementary carpet member of the present invention.
Fig. 4 is a cross-sectional view of one form of the elementary carpet member taken along line 4--4 of Fig. 2B.
Fig. 5 is a cross-sectional view of another form of the elementary carpet member taken along line 5--5 of Fig. 2C.
Fig. 6 is a top schematic diagram of one flat configuration of the hollow fiber membrane carpet of the present invention assembled from a plurality of elementary carpet members having the form of Figs. 2B and 4.
Fig. 7 is a longitudinal sectional view of the carpet taken along line 7--7 of Fig. 6.
Fig. 8 is an enlarged cross-sectional view of the carpet taken along line 8--8 of Fig. 6.
Fig. 9 is a top schematic diagram of another flat configuration of the hollow fiber membrane carpet of the present invention assembled from a plurality of elementary carpet members having the form of Figs. 2C and 5.
Fig. 10 is a longitudinal sectional view of the carpet taken along line 10--10 of Fig. 9.
Fig. 11 is a cross-sectional view of the carpet taken along line 11--11 of Fig. 9.
Fig. 12 is an end schematic diagram of an annular configuration of the hollow fiber membrane carpet of the present invention assembled from a plurality of elementary carpet members having the form of Figs. 2C and 5.
Fig. 13 is an enlarged foreshortened longitudinal sectional view of one of the hollow fibers employed in the carpet.

### Best Mode for Carrying Out the Invention

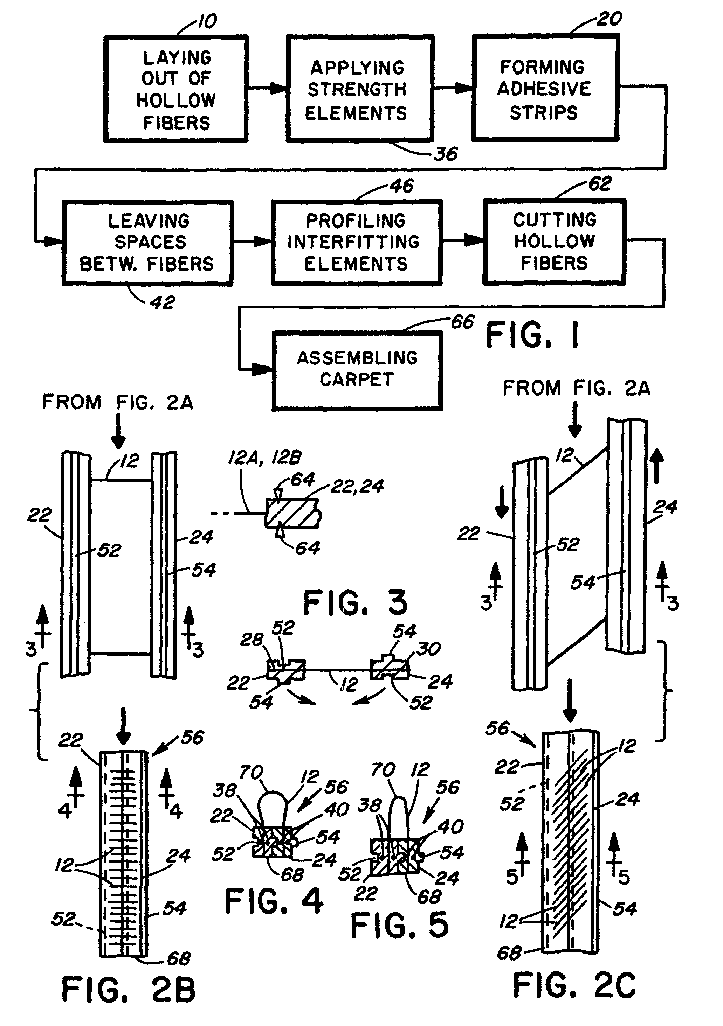

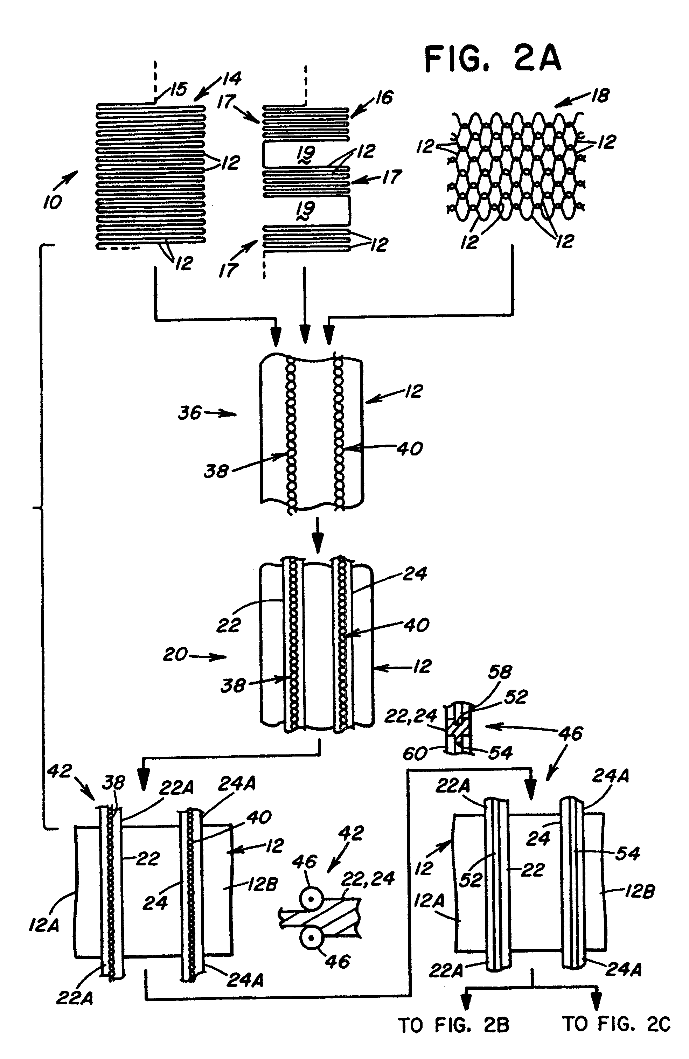

Referring to the drawings, and particularly to Figs. 1, 2A, 2B and 2C, there is illustrated, in both general and schematical forms, a hollow fiber membrane carpet manufacturing method in accordance with the present invention. Referring to the block 10 of Fig. 1 and to the diagram of Fig. 2A, the first basic step of the carpet manufacturing method that is performed is laying out a multiplicity of hollow fibers 12. There are several alternative arrangements of the hollow fibers 12 that can be provided to use in performing the first step of the method. Three of the alternative arrangements are illustrated in Fig. 2. In a first arrangement generally designated 14, the hollow fibers 12 are provided in generally side-by-side relationship to one another from a single continuous strand 15. In a second arrangement generally designated 16, the hollow fibers 12 are provided from a single continuous strand 15 in a plurality of groups 17 being spaced apart from one another so as to define empty gaps 19 between them. In a third arrangement generally designated 18, the hollow fibers 12 are provided in a textile form in which they overlap and interloop with one another. In each arrangement shown in Fig. 2A, the single lines can either represent single or individual hollow fibers 12 or a plurality of hollow fibers bunched together.

Referring to the block 20 of Fig. 1 and to the diagram of Fig. 2A, the second basic step of the carpet manufacturing method that is performed is forming a pair of strips 22, 24 of non-permeable adhesive material across the hollow fibers 12 in a spaced relationship from one another. The material of the strips 22, 24 is applied to the fibers 12 in a flowable state so as to encapsulate selected adjacent portions of the hollow fibers 12 that are aligned in two spaced apart rows.

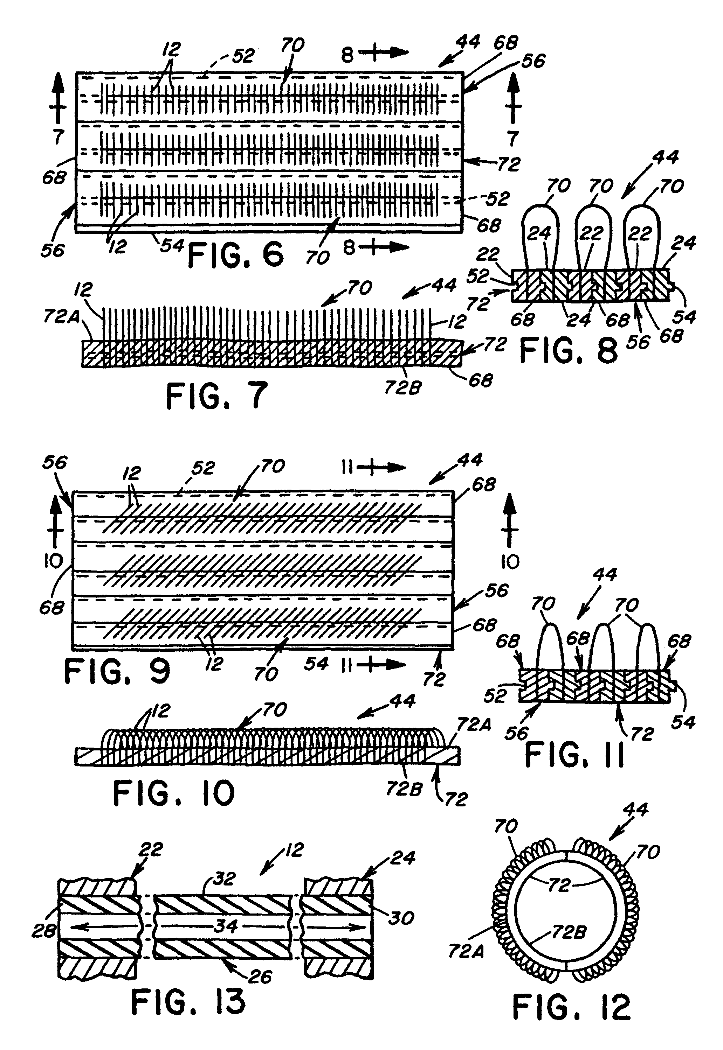

Referring to Fig. 13, each hollow fiber 12 extending between the spaced strips 22, 24 includes an elongated tubular wall 26 having a pair of spaced opposite end portions 28, 30 which are encapsulated respectively in the strips 22, 24. The tubular wall 26 also has an elongated main portion 32 interconnecting the opposite ends portions 28, 30 of the hollow fiber 12 and extending across and through the space between the strips 22, 24. The main portion 32 of the tubular wall 26 defines an elongated internal lumen or bore 34 providing flow communication between the opposite end portions 28, 30 and thereby flow communication through the hollow fiber 12. The tubular wall 26 of each hollow fiber 12 is made of a suitable permeable material having the predetermined properties that adapt it for use in a desired application. For example, the wall 26 can be made of a plastic material that is porous and selective to mass transfer, or porous and non-selective, or nonporous and permeable to mass components. Preferably, the plastic material of the tubular wall 26 of each hollow fiber 12 is a highly crystallic thermoplastic polymer. Furthermore, the hollow fiber 12 preferably can have the range of lengths and diameters set forth in the U.S. patents by the inventor herein as were cited earlier in the background section of this application.

Referring to the block 36 of Fig. 1 and to the diagram of Fig. 2A, an optional, but preferred, step of the carpet manufacturing method that is performed is applying elongated strengthening elements 38, 40 across the selected adjacent portions of the hollow fibers 12 in spaced relationship with one another prior to forming the pair of strips 22, 24 of non-permeable adhesive material thereon. The strengthening elements 38, 40 will thereby be encapsulated by the strips 22, 24 along with the selected adjacent portions of the hollow fibers 12. The strengthening elements 38, 40 are applied across the selected adjacent portions of the hollow fibers 12 by interweaving the strengthening elements between bunches of the hollow fibers 12. The encapsulated strengthening elements 38, 40 will thus extend longitudinally through the respective strips 22, 24.

Referring to the block 42 of Fig. 1 and to the diagram of Fig. 2A, another optional, but preferred, step of the carpet manufacturing method that is performed is providing segments 22A, 24A of the strips 22, 24 free of hollow fibers 12 so that these segments can later be used to attach to suitable support members (not shown) a hollow fiber member carpet 44 (see Figs. 6, 9 and 12) being manufactured by the method of the present invention. One exemplary way in which the fiber-free segments 22A, 24A of the strips 22, 24 are provided is by thickening short spans of the strips 22, 24 at places therealong which will form the attaching segments of the resulting carpet 44 and then lengthening these thickened spans by using any suitable means, such as pairs of rollers 46, 48, to squeeze them while the adhesive material is in the plastic or flowable state (before drying to a hardened state) to permanently reduce the thickness of the short spans and thereby cause elongation thereof to provide the segments 22A, 24A. The laying out of the hollow fibers 12 in the first step of the method, represented by block 10, can be coordinated to leave gaps between the fibers which are then bridged by the thickened spans of the strips 22, 24.

Referring to the block 46 of Fig. 1 and to the diagram of Fig. 2A, another optional, but preferred, step of the carpet manufacturing method that is performed is profiling the strips 22, 24 to form complementary matable interfitting elements 52, 54, such as tongue and groove elements, on opposite sides of each of the strips 22, 24 so that corresponding ones of the strips 22, 24 can be mated and sealably attached to one another to form an elementary carpet member 56. The elementary carpet members 56 are the fundamental building blocks or components with which the hollow fiber membrane carpet 44 of a desired configuration is later assembled. Like the lengthening step, one exemplary manner in which the profiling of strips 22, 24 is brought about is by using any suitable means, such as pairs of rollers 58, 60, to reshape the cross-section of the material of the strips 22, 24 while in the flowable state (before cured to a hardened state) so as to define the complementary matable interfitting features 52, 54 therein.

Referring to the block 62 of Fig. 1 and to the diagrams of Fig. 2B and 2C, the third basic step of the manufacturing method that is performed is cutting selected portions of the hollow fibers 12 so as to open the hollow fibers 12 to communication at least at one and preferably at both of the opposite end portions 28, 30 thereof. Any suitable means, such as severing knifes or blades 64, can be employed to cut the opposite excess portions 12A, 12B of the hollow fibers 12 extending beyond the strips 22, 24. Preferably, such severing or cutting is performed by trimming off edge portions of the strips 22, 24 with the excess portions of the hollow fibers 12.

Referring to the block 66 of Fig. 1 and to the diagrams of Figs. 2B, 2C and 3, the fourth basic step of the carpet manufacturing method that is performed is assembling the pair of strips 22, 24 with the hollow fibers 12 extending therebetween to form the elementary carpet members 56, as seen in Figs. 2B, 2C, 4 and 5, and then to form the elementary carpet members 56 into the hollow fiber membrane carpet 44, as seen in Figs. 6, 9 and 12. The assembling of the elementary carpet member 56 is preferably performed by bringing and attaching the pair of strips 22, 24 together through mating of their respective complementary interfitting elements 52, 54 to one another. Alternatively, the strips 22, 24 can have relatively flat (non-profiled) surfaces which are merely adhesively attached to one another.

Figs. 2B and 3 show the assembling of one form of the elementary carpet member by bringing the strips 22, 24 into a side-by-side relationship in which they can then be mated and/or attached to one another to form a base element 68 of the elementary carpet member 56, as shown in Figs. 2B and 4. The strips 22, 24 are brought together by disposing them lengthwise with their longitudinal extents parallel to one another, causing the main portions 32 of the hollow fibers 12 to bend and form loops 70, as seen in Fig. 4. The loops 70 lie in individual planes which are disposed generally parallel to one another and perpendicular to the longitudinal extent of the strips.

Figs. 2C and 3 show the assembling of another form of the elementary carpet member 56 by offsetting and bringing the strips 22, 24 into a side-by-side relationship in which they can then be mated and/or attached to one another to form the base element 68 of the elementary carpet member 56, as shown in Figs. 2C and 5. Preferably, the strips 22, 24 are first brought together by offsetting them in opposite directions from one another along their longitudinal extent before mating their respective complementary interfitting elements 52, 54 to one another and thus prior to attaching the strips to one another. Bringing the strips 22, 24 into the offset side-by-side relationship where they are then mated and attached to one another causes the opposite end portions 28, 30 of each of the hollow fibers 12 to be offset from one another in the same opposite directions along the longitudinal extents of the strips 22, 24. The main portions 32 of the hollow fibers 12 now bend and form loops 70 which, by extending between and interconnect the respective offset opposite end portions 28, 30 now overlap with one another and are disposed in planes generally parallel to one another but at a small acute angles to the longitudinal extents of the strips 22, 24, instead of being disposed in planes that are generally parallel to one another and perpendicular to the longitudinal extent of the strips 22, 24. By such longitudinal offsetting of the strips 22, 24 relative to one another, there is a reduction of bending stresses imposed on the main portions 32 of the hollow fibers which results in a substantially reduced risk of damage to the looped hollow fibers 12.

Referring to Figs. 4 and 5, the mating and attaching of the strips 22, 24 to one another forms the base element 68 of the elementary carpet member 56 which when mated and attached with the base elements 68 of other adjacently-disposed elementary carpet members 56 forms the support base 72 of the hollow fiber membrane carpet 44, as shown in Figs. 6, 9 and 12. It can be readily understood that pairs of the above-mentioned encapsulated strengthening elements 38, 40 now extend longitudinally through each of the respective elementary carpet members 56 which accordingly enhances the strength and structural integrity of the support base 72 of the carpet 44 supporting the hollow fiber loops 70.

Referring to Figs. 6-12, there is shown several different configurations of the hollow fiber membrane carpet 44 that can be assembled from the identical elementary carpet members 56 of the present invention by carrying out the above-described steps of the carpet manufacturing method of the present invention. In one embodiment, the hollow fiber membrane carpet 44 is provided in a flat configuration with the hollow fiber loops 70 extending outwardly from one side 72A of the flat support base 72 and the encapsulated end portions of the fibers being open at the opposite side 72B of the flat support base 72. In another embodiment, the hollow fiber membrane carpet 44 is provided in an annular, for example a cylindrical, configuration with the hollow fiber loops 70 extending outwardly from the outside 72A (or alternatively from the inside 72B) of the cylindrical support base 72 and the encapsulated opposite end portions of the fibers being open at the inside 72B (or alternatively at the outside 72A) of the cylindrical support base 72. The carpet 44 can just as readily be provided in other configurations as desired by users. Furthermore, distribution channels can be provided along the fiber-free segments of the carpet 44.

### Industrial Applicability

The hollow fiber membrane carpet of the present invention manufactured by the method of the present invention is adapted for use in numerous industrial applications. The broad applicability of the hollow fiber membrane carpet of the present invention to many industrial fields of use is facilitated by the ability of the method of the present invention to manufacture carpets of different sizes and configurations tailored to the particular needs and requirements of the specific industrial applications.

Some representative industrial applications are membrane absorbers for cleanup of flue gases from sulphur dioxides and nitrogen oxides, membrane systems for waste water cleanup and treatment, membrane contactors for oxygen and carbon dioxide removal from water, and membrane systems for separation of air into oxygen rich as well as oxygen lean fractions. Large scale removal of sulphur dioxides and nitrogen oxides from flue gases of coat burning power plants still is a significant problem to overcome for the protection of the environment, especially in retrofitting the existing fossil fuel burning power plants. Inexpensive sources of oxygen or oxygen-enriched air could open new horizons in environmentally friendly coal conversions. Water conditioning, especially water deaeration and deoxidation, are involved in some of the most important processes of energy production in thermal and nuclear power plants.

The best solutions to all of these problems are the ones employing membrane processes but the commercial systems presently on the market, although promising from a technical point of view, are still to expensive to find widespread use in diverse applications. It appears that membrane technology is awaiting a fundamental breakthrough in production methods before use on a broad scale can proceed and gain wide acceptance. It is such fundamental breakthrough that is believed to be provided by the modular approach to hollow fiber membrane carpet manufacture of the present invention.

The hollow fiber membrane carpets of the present invention can be used advantageously in these broad industrial applications due to the extremely high packing density of the membrane area provided and the regularity and unique space structure of the carpet textile form. These parameters determine the effectiveness of the mass transfer processes in most applications, but particularly in the applications of artificial lungs (gas-liquid membrane contactors) and artificial kidneys (liquid-liquid membrane extractors). The utility of the textile form is substantially enhanced by the reduction of back pressure effect that occurs due to the high hydraulic resistance to flows of process fluids inside of small channels of long hollow fibers.

## Claims

1. A method of manufacturing a hollow fiber membrane carpet, comprising the steps of:
(a) laying out a multiplicity of hollow membrane fibers (12);
(b) forming a pair of strips (22, 24) of non-permeable adhesive material on the hollow fibers in a transverse relationship thereto and in a spaced relationship from one another such that main portions of the hollow fibers extend between the spaced strips;
(c) cutting selected portions of said hollow fibers (12) adjacent to said spaced strips so as to open said hollow fibers to communication at least at one of a pair of opposite end portions of the hollow fibers supported in the spaced strips; and
(d) assembling the hollow fibers (12) and spaced strips (22, 24) into a hollow fiber membrane carpet (44) by
(i) bringing and attaching the strips (22, 24) together in a side-by-side relationship to one another so as to form a plurality of elementary carpet members (56) each having an elongated base element (68) formed by the attached strips and a multiplicity of loops (70) formed by the main portions (32) of the hollow fibers extending from the opposite end portions thereof supported in the base element (68), and
(ii) positioning together said elementary carpet members (56) to provide the hollow fiber membrane carpet by attaching in side-by-side relationships the base elements (68) of adjacent elementary carpet members (56) to form a support base (72) of the hollow fiber membrane carpet with the hollow fiber loops (70) extending outwardly from a side of the support base (72).

2. The method of claim 1 wherein said hollow fibers (12) are laid out in side-by-side relationship to one another.

3. The method of claim 1 wherein said hollow fibers (12) are laid out in a textile form.

4. The method of claim 1 wherein said hollow fibers (12) are laid out in a knitted textile form in which said hollow fibers overlap and interloop with one another.

5. The method of claim 1 wherein said hollow fibers (12) are laid out from a single continuous thread of said hollow fiber.

6. The method of claim I wherein said hollow fibers (12) are laid out in bunches in which individual hollow fibers are disposed in side-by-side relationship to one another and in which said bunches of hollow fibers are also disposed in side-by-side relationship to one another.

7. The method of claim 1 wherein said cutting opposite excess portions of the hollow fibers (12) extending beyond the strips (22, 24) by trimming off edge portions of the strips with the excess portions of the hollow fibers (12).

8. The method of claim 1 wherein said bringing of the strips (22, 24) together includes offsetting the strips in opposite directions from one another along their longitudinal extents prior to attaching the strips together in the side-by-side relationship.

9. The method of claim 8 wherein said offsetting of the strips (22, 24) longitudinally relative to one another bends the hollow fibers (12) extending between the strips so as to provide the multiplicity of loops (70) which overlap one another and extend in planes disposed at small acute angles to the longitudinal extents of the strips.

10. The method of claim 1 wherein said support base of the hollow fiber membrane carpet is provided in a generally flat configuration and the loops (70) of hollow fibers extend outwardly from one side of the flat support base with the end portions of the hollow fibers (12) being open at an opposite side of the flat support base (72).

11. The method of claim 1 wherein said support base (72) of the hollow fiber (12) membrane carpet is formed in an annular configuration and the loops (70) of hollow fibers (12) extend outwardly from an outside of the annular support base (72) with the end portions of the hollow fibers being open at an inside of the annular support base.

12. The method of claim 1 further comprising:
applying a pair of elongated strengthening elements (38, 40) across said selected adjacent portions of said hollow fibers (12) in a transverse relationship thereto and in a spaced relationship from one another prior to forming said pair of strips (22, 24) of non-permeable adhesive material to thereby encapsulate the strengthening elements with the selected adjacent portions of the hollow fibers by said strips such that the strengthening elements extend longitudinally through the respective strips.

13. The method of claim 12 wherein said elongated strengthening elements (38, 40) are applied across said selected adjacent portions of said hollow fibers by interweaving the strengthening elements between bunches of said hollow fibers.

14. The method of claim 1 further comprising:
coordinating the laying out of the hollow fibers (12) with the applying of the strips (22, 24) to provide segments of the stripe free of hollow fibers and that bridge gaps between the hollow fibers such that these segments of the strips define means for attaching the carpet to external support members.

15. The method of claim 14 wherein said applying of the strips includes;
providing thickened spans of the strips at places therealong which will form the attaching segments of the resulting carpet; and
lengthening the thickened spans by reducing the thickness thereof to thereby cause elongation thereof to provide the segments.

16. The method of claim 1 further comprising:
profiling said strips (22, 24) by forming complementary interfitting elements (52, 54) on opposite sides thereof so that the strips can be attached to one another to farm the elementary carpet member.

17. The method of claim 16 wherein said bringing of the strips (22, 24) together includes mating of the respective complementary interfitting (52, 54) elements to one another.

18. The method of claim 16 wherein said bringing of the strips (22, 24) together includes offsetting the strips in opposite directions from one another along their longitudinal extents before mating the interfitting elements (52, 54) to one another.

19. An elementary carpet member for use in forming a hollow fiber membrane carpet, said elementary carpet member comprising:
(a) a pair of strips (22, 24) of non-permeable adhesive material being positioned lengthwise adjacent to one another;
(b) means for attaching said strips to one another in a side-by-side relationship to form an elongated base element (68); and
(c) a multiplicity of hollow membrane fibers (12) each having a tubular wall with a pair of spaced opposite end portions and a main portion interconnecting said opposite end portions, said opposite end portions of each of said hollow fibers being supported in respective ones of said strips and extending therefrom through surfaces of said strips disposed side-by-side one another and extending in substantially the same plane, said elongated main portions of said hollow fibers (12) being bent so as to form a multiplicity of loops (70) extending from a side of said elongated base element formed by said attached strips.

20. The member of claim 19 wherein said strips (22, 24) having longitudinal extents are attached to one another in offset relationship in opposite directions along their longitudinal extents such that said opposite end portions of each of said hollow fibers (12) are offset from one another in said opposite directions causing said multiplicity of loops (70) to overlap with one another and extend in planes disposed at small acute angles to the longitudinal extents of the strips.

21. The member of claim 19 wherein said strips (22, 24) having longitudinal extents are brought together by disposing them lengthwise with their longitudinal extents parallel to one another causing said multiplicity of loops (70) to extend in individual planes disposed generally parallel to one another and perpendicular to the longitudinal extents of said strips (22, 24).

22. The member of claim 19 wherein said means for attaching includes complementary interfitting elements (52, 54) formed on a pair of opposite sides of each of said strips (22, 24) which matably attach said strips together to form said base element (68) and further for matably attaching other base elements (68) of adjacently positioned elementary carpet members (56) to said base element (68) of a respective one elementary carpet member (56) to form a hollow fiber (12) membrane carpet from a plurality of elementary carpet members (56).

23. The member of claim 19 further comprising:
an elongated strengthening element (38, 40) encapsulated in and extending longitudinally through each of said strips (22, 24) forming said base element (68) of said elementary carpet member (56).

24. The member of claim 19 wherein said tubular wall of each of said hollow fibers (12) has an elongated internal bore extending through said elongated main portion and said opposite end portions providing flow communication between said opposite end portions through said main portion.

25. The member of claim 19 wherein said tubular wall of each of said hollow fibers (12) is made of a permeable material.

26. The member of claim 19 wherein said tubular wall of each of said hollow fibers (12) is made of a thermoplastic material.

27. A hollow fiber membrane carpet, comprising:
(a) a plurality of elementary carpet members (56), each member including
(i) a pair of strips (22, 24) of non-permeable adhesive material being positioned lengthwise adjacent to one another,
(ii) means for attaching said strips to one another in a side-by-side relationship to form an elongated base element (68), and
(iii) a multiplicity of hollow membrane fibers (12) each having a tubular wall with a pair of spaced opposite end portions and a main portion interconnecting said opposite end portions, said opposite end portions of each of said hollow fibers being supported in respective ones of said strips and extending therefrom through surfaces of said strips disposed side-by-side one another and extending in substantially the same plane, said elongated main portions of said hollow fibers being bent so as to form a multiplicity of loops (70) extending from a side of said elongated base element formed by said attached strips; and
(b) means for attaching said elongated base elements of said elementary carpet members to one another in a side-by-side relationship to form an elongated support base (72) of a hollow fiber membrane carpet with said hollow fiber loops (70) extending outwardly from a side of said support base.

28. The carpet of claim 27 wherein said strips (22, 24) of each of said elementary carpet member has longitudinal extents and said strips are attached to one another in offset relationship in opposite directions along their longitudinal extents such that said opposite end portions of each of said hollow fibers are offset from one another in said opposite directions causing said multiplicity of loops (70) to overlap with one another and extend in planes disposed at small acute angles to the longitudinal extents of the strips.

29. The carpet of claim 27 wherein said strips (22, 24) of each of said elementary carpet members (56) has longitudinal extents and are brought together by disposing said strips lengthwise with their longitudinal extents parallel to one another causing said multiplicity of loops (70) to extend in individual planes disposed generally parallel to one another and perpendicular to the longitudinal extents of said strips.

30. The carpet of claim 27 wherein said means for attaching said strips (22, 24) of each member to one another and for attaching said members to one another includes complementary interfitting elements (52, 54) formed on a pair of opposite sides of each of said strips of each of said members for matably attaching said strips together to form said base element (68) of each of said members and for matably attaching said base elements of adjacently positioned ones of said members together to form said support base (72) of said carpet.

31. The carpet of claim 27 further comprising:
an elongated strengthening element (38, 40) encapsulated in and extending longitudinally through each of said strips (22, 24) forming said base element (68) of each of said elementary carpet members (56).

32. The carpet of claim 27 wherein said support base (72) is formed in a generally flat configuration and said loops (70) of said hollow fibers (12) extend outwardly from one side of said flat support base with said opposite end portions of said hollow fibers being open at an opposite side of said flat support base.

33. The carpet of claim 27 wherein said support base (72) is formed in an annular configuration and said loops (70) of said hollow fibers extend outwardly from a side of said annular support base with said end portions of said hollow fibers (12) being open at an opposite side of said annular support base.

34. The carpet of claim 27 wherein said tubular wall of each of said hollow fibers (12) has an elongated internal bore extending through said elongated main portion and said opposite end portions providing flow communication between said opposite end portions through said main portion.

35. The carpet of claim 27 wherein said tubular wall of each of said hollow fibers (12) is made of a permeable material.

36. The carpet of claim 27 wherein said tubular wall of each of said hollow fibers (12) is made of a thermoplastic material.

## Patentansprüche

1. Verfahren zum Herstellen eines Hohlfasermembranteppichs, umfassend die Schritte:
(a) Auslegen (lay out) einer Vielzahl an Hohlmembranfasern (12);
(b) Bilden eines Paares von Streifen (22, 24) aus nicht-permeablem Klebematerial auf den Hohlfasern in Querrichtung zu ihnen und voneinander beabstandet, so dass sich Hauptabschnitte der Hohlfasern zwischen den beabstandeten Streifen erstrecken;
(c) Schneiden ausgewählter Abschnitte der Hohlfasern (12) angrenzend an den beabstandeten Streifen, um die Hohlfasern für die Verbindung an zumindest einem Ende eines Paares gegenüberliegender Endabschnitte von den beabstandeten Streifen getragenen Hohlfasern zu öffnen; und
(d) Montieren der Hohlfasern (12) und der beabstandeten Streifen (22, 24) zu einem Hohlfasermembranteppich durch
(i) Zusammenbringen und Befestigen der Streifen aneinander in einer Seite-an-Seite-Anordnung, um eine Vielzahl an Teppichelementarstücken (56) zu bilden, die jeweils ein gestrecktes Basiselement (68) besitzen, das durch die befestigten Streifen gebildet wird und eine Vielzahl an Schlaufen (70), die durch die Hauptabschnitte (32) der Hohlfasern gebildet werden und sich von deren gegenüberliegenden Endabschnitten erstrecken und vom Basiselement (68) getragen werden, und
(ii) Anordnen der Teppichelementarstücke (56) um den Hohlfasermembranteppich zu bilden, durch Befestigen der Basiselemente (68) angrenzender Teppichelementarstücke (56) in einer Seite-an-Seite-Anordnung, um eine Trägerbasis (72) des Hohlfasermembranteppich zu bilden, wobei die Hohlfaserschlaufen (70) sich nach außen von einer Seite der Trägerbasis (72) erstrecken.

2. Verfahren nach Anspruch 1, wobei die Hohlfasern (12) Seite-an-Seite zueinander ausgelegt werden.

3. Verfahren nach Anspruch 1, wobei die Hohlfasern (12) in einer textilen Form ausgelegt werden.

4. Verfahren nach Anspruch 1, wobei die Hohlfasern (12) in einer gewirkten textilen Form ausgelegt werden, in der die Hohlfasern einander überlappen und umschlingen.

5. Verfahren nach Anspruch 1, wobei die Hohlfasern (12) ausgelegt werden aus einem einzelnen durchgehenden Faden der Hohlfaser.

6. Verfahren nach Anspruch 1, wobei die Hohlfasern (12) in Bündeln ausgelegt werden, in denen einzelne Hohlfasern Seite-an-Seite zueinander angeordnet sind, und in der auch die Hohlfaserbündel Seite-an-Seite zueinander angeordnet sind.

7. Verfahren nach Anspruch 1, wobei beim Schneiden gegenüberliegende überstehende Abschnitte der Hohlfasern (12), die sich über die Streifen (22, 24) hinaus erstrecken, abgeschnitten werden durch Stutzen von Kantenabschnitten der Streifen mit den überstehenden Abschnitten der Hohlfasern (12).

8. Verfahren nach Anspruch 1, wobei das Zusammenbringen der Streifen (22, 24) umfasst: das versetzte Anordnen der Streifen in einander gegenüberliegenden Richtungen entlang ihrer Längserstreckungen vor dem Befestigen der Streifen Seite-an-Seite aneinander.

9. Verfahren nach Anspruch 8, wobei beim versetzten Anordnen der Streifen (22, 24) längs relativ zueinander die sich zwischen den Streifen erstreckenden Hohlfasern (12) gebogen werden, um eine Vielzahl an Schlaufen (70) zu bilden, die einander überlappen und sich in Ebenen erstrecken, die zueinander in kleinen spitzen Winkeln zur Längserstreckung der Streifen angeordnet sind.

10. Verfahren nach Anspruch 1, wobei die Trägerbasis des Hohlfasermembranteppichs gebildet wird in einer im Wesentlichen flachen Konfiguration und die Schlaufen (70) der Hohlfasern sich nach außen von einer Seite der flachen Trägerbasis erstrecken, und wobei die Endabschnitte der Hohlfasern (12) offen sind an einer gegenüberliegenden Seite der flachen Trägerbasis (72).

11. Verfahren nach Anspruch 1, wobei die Trägerbasis (72) des Hohlfaser-(12)-Membranteppichs in einer ringförmigen Konfiguration gebildet wird und die Schlaufen (70) der Hohlfasern (12) sich nach außen von einer Außenseite der ringförmigen Trägerbasis (72) erstrecken und wobei die Endabschnitte der Hohlfasern an einer Innenseite der gewinkelten Trägerbasis offen sind.

12. Verfahren nach Anspruch 1, ferner umfassend: Applizieren eines Paars gestreckter Verstärkungselemente (38, 40) über den ausgewählten angrenzenden Abschnitten der Hohlfasern (12) in Querrichtung zu diesen und voneinander beabstandet vor dem Bilden von Paaren von Streifen (22, 24) aus nicht-permeablen Klebematerial, um dadurch die Verstärkungselemente mit den ausgewählten angrenzenden Abschnitten der Hohlfasern durch die Streifen einzuschließen, so dass sich die Verstärkungselemente in Längsrichtung durch die jeweiligen Streifen erstrecken.

13. Verfahren nach Anspruch 12, wobei die gestreckten Verstärkungselemente (38, 40) über die ausgewählten angrenzenden Abschnitte der Hohlfasern appliziert werden durch Verweben der Verstärkungselemente zwischen Bündeln der Hohlfasern.

14. Verfahren nach Anspruch 1, ferner umfassend: Abstimmen des Auslegens der Hohlfasern (12) mit dem Applizieren der Streifen (22, 24), um Segmente der Streifen bereitzustellen, die frei von Hohlfasern sind und Lücken zwischen den Hohlfasern überbrücken, so dass diese Segmente der Streifen Mittel zum Befestigen des Teppichs an externe Trägermittel bilden.

15. Verfahren nach Anspruch 14, wobei das Applizieren der Streifen umfasst:
Bereitstellen verdickter Abschnitte, die die Befestigungssegmente des entstehenden Teppichs bilden werden an einzelnen Orten entlang der Streifen; und
Verlängern der verdickten Abschnitte durch Verringern ihrer Dicke, um dadurch eine Streckung zu bewirken, um die Segmente bereitzustellen.

16. Verfahren nach Anspruch 1, ferner umfassend: Profilieren der Streifen (22, 24) durch Formen einander komplementärer ineinander passender Elemente (52, 54) auf gegenüberliegenden Seiten der Streifen, so dass die Streifen aneinander befestigt werden können, um das Teppichelementarstück zu bilden.

17. Verfahren nach Anspruch 16, wobei das Zusammenbringen der Streifen (22, 24) umfasst: das Zusammenfügen der jeweiligen komplementären ineinander passenden Elemente (52, 54).

18. Verfahren nach Anspruch 16, wobei das Zusammenbringen der Streifen (22, 24) umfasst: das versetzte Anordnen der Streifen in einander gegenüberliegenden Richtungen entlang ihrer Längserstreckungen vor dem Zusammenfügen der ineinander passenden Elemente (52, 54) ineinander.

19. Teppichelementarstück zum Bilden eines Hohlfasermembranteppichs, wobei das Teppichelementarstück umfasst:
(a) ein Paar Streifen (22, 24) eines nicht-permeablen Klebematerials, die längs angrenzend zueinander angeordnet sind;
(b) Mittel zum Befestigen der Streifen aneinander in einer Seite-an-Seite-Anordnung, um ein gestrecktes Basiselement (68) zu bilden; und
(c) eine Mehrzahl an Hohlmembranfasern (12), die jeweils eine röhrenförmige Wand mit einem Paar beabstandeter gegenüberliegender Endabschnitte und einem Hauptabschnitt besitzen, der die gegenüberliegenden Endabschnitte verbindet,
wobei die gegenüberliegenden Endabschnitte jeder der Hohlfasern von jeweils zugeordneten Streifen getragen werden und sich von diesen durch Oberflächen der Streifen erstrecken, die Seite-an-Seite aneinander ausgerichtet sind und sich im Wesentlichen in der gleichen Ebene erstrecken, wobei die gestreckten Hauptabschnitte der Hohlfasern (12) gebogen sind, um eine Vielzahl an Schlaufen (70) zu bilden, die sich von einer Seite des gestreckten Basiselements erstrecken, das von den befestigten Streifen gebildet wird.

20. Stück nach Anspruch 19, wobei die Streifen (22, 24), die eine Längserstreckung besitzen, in gegenüberliegenden Richtungen entlang ihrer Längserstreckungen versetzt aneinander befestigt sind, so dass die gegenüberliegenden Endabschnitte jeder der Hohlfasern (12) voneinander in die gegenüberliegenden Richtungen versetzt sind, so dass die Vielzahl an Schlaufen (70) einander überlappt und sich in Ebenen erstreckt, die in kleinen spitzen Winkeln zur Längserstreckung der Streifen angeordnet sind.

21. Stück nach Anspruch 19, wobei die Streifen (22, 24), die eine Längserstreckung besitzen, zusammengebracht werden, indem sie der Länge nach mit parallelen Längserstreckungen zueinander angeordnet werden, wodurch die Vielzahl an Schlaufen (70) sich in einzelnen Ebenen erstrecken, die im Wesentlichen parallel zueinander angeordnet sind und senkrecht zur Längserstreckung der Streifen (22, 24).

22. Stück nach Anspruch 19, wobei die Mittel zum Befestigen umfassen: komplementäre ineinander passende Elemente (52, 54), die an einem Paar gegenüberliegender Seiten jedes der Streifen (22, 24) geformt sind, die die Streifen zusammenfügend aneinander befestigen, um das Basiselement (68) zu bilden und femer zum zusammenfügenden Befestigen weiterer Basiselemente (68) angrenzend angeordneter Teppichelementarstücke (56) an dem Basiselement (68) eines jeweiligen Teppichelementarstücks (56) verbinden, um einen Hohlfaser-(12)-Membranteppich aus einer Mehrzahl von Teppichelementarstücken (56) zu bilden.

23. Stück nach Anspruch 19, ferner umfassend:
Ein gestrecktes Verstärkungselement (38, 40), eingeschlossen in und sich längs erstreckend durch jeden der Streifen (22, 24) und das Basiselement (68) des Teppichelementarstücks (56) bildend.

24. Stück nach Anspruch 19, wobei die röhrenförmige Wand jeder der Hohlfasern (12) einen gestreckten internen Hohlraum besitzt, der sich durch den gestreckten Hauptabschnitt erstreckt, und wobei die gegenüberliegenden Endabschnitte eine Flussverbindung zwischen den gegenüberliegenden Endabschnitten durch den Hauptabschnitt bereitstellen.

25. Stück nach Anspruch 19, wobei die röhrenförmige Wand jeder der Hohlfasern (12) aus einem permeablen Material hergestellt ist.

26. Stück nach Anspruch 19, wobei die röhrenförmige Wand jeder der Hohlfasern (12) aus einem thermoplastischen Material hergestellt ist.

27. Hohlfasermembranteppich, umfassend:
(a) eine Vielzahl an Teppichelementarstücken (56), jede umfassend
(i) ein Paar Streifen (22, 24) aus nicht-permeablem Klebematerial, die längsweise aneinander angrenzend angeordnet sind,
(ii) Mittel zum Befestigen der Streifen aneinander in einer Seite-an-Seite-Ausrichtung, um ein gestrecktes Basiselement (68) zu bilden, und
(iii) eine Vielzahl an Hohlmembranfasern (12), die jeweils eine röhrenförmige Wand mit einem Paar beabstandeter gegenüberliegender Endabschnitte und einem Hauptabschnitt besitzen, der die gegenüberliegenden Endabschnitte verbindet, wobei die gegenüberliegenden Endabschnitte jeder der Hohlfasern von jeweils zugerordneten Streifen betragen werden und sich davon durch Oberflächen der Streifen erstrecken, die Seite-an-Seite angeordnet sind und sich im Wesentlichen in der gleichen Ebene erstrecken, wobei die verlängerten Hauptabschnitte der Hohlfasern gebogen sind, um eine Mehrzahl an Schlaufen (70) zu bilden, die sich von einer Seite des verlängerten Basiselements erstrecken, das von den befestigten Streifen gebildet wird; und
(b) Mittel zum Befestigen der gestreckten Basiselemente der Teppichelementarstücke aneinander in einer Seite-an-Seite-Ausrichtung, um eine gestreckte Trägerbasis (72) eines Hohlfasermembranteppichs zu bilden, wobei die Hohlfaserschleifen (70) sich nach außen von einer Seite der Trägerbasis erstrecken.

28. Teppich nach Anspruch 27, wobei die Streifen (22, 24) jedes der Teppichelementarstücke eine Längserstreckung besitzen und die Streifen so aneinander befestigt sind, dass sie entlang ihrer Längserstreckung in gegenüberliegenden Richtungen zueinander versetzt angeordnet sind, so dass die gegenüberliegenden Endabschnitte jeder der Hohlfasern voneinander in die gegenüberliegenden Richtungen versetzt sind, wodurch die Mehrzahl an Schlaufen (70) einander überlappt und sich in Ebenen erstreckt, die in kleinen spitzen Winkeln zu den Längserstreckungen der Streifen angeordnet sind.

29. Teppich nach Anspruch 27, wobei die Streifen (22, 24) jedes der Teppichelementarstücke (36) eine Längserstreckung besitzen und zusammengebracht werden durch längsweises Anordnen der Streifen mit zueinander parallelen Längserstreckungen, wodurch die Mehrzahl an Schlaufen (70) sich in einzelnen Ebenen erstreckt, die im Wesentlichen parallel zueinander angeordnet sind und senkrecht zu den Längserstreckungen der Streifen.

30. Teppich nach Anspruch 27, wobei die Mittel zum Befestigen der Streifen (22, 24) jedes der Stücke aneinander und zum Befestigen der Stücke aneinander umfassen: komplementäre ineinander passende Elemente (52, 54), die auf einem Paar gegenüberliegender Seiten jedes der Streifen jedes der Stücke geformt sind, zum zusammenfügenden Befestigen der Streifen aneinander zum Bilden des Basiselements (68) jedes der Stücke und zum zusammenfügenden Befestigen der Basiselemente von aneinander angrenzenden Stücken aneinander, um die Trägerbasis (72) des Teppichs zu bilden.

31. Der Teppich nach Anspruch 27, ferner umfassend: ein gestrecktes Verstärkungselement (38, 40), eingeschlossen in und sich längs durch jeden der Streifen (22, 24) erstreckend, die das Basiselement (68) jedes der Elementarteppichstücke (56) bilden.

32. Der Teppich nach Anspruch 27, wobei die Trägerbasis in einer im Wesentlichen flachen Konfiguration gebildet ist und sich die Schleifen (70) der Hohlfasern (12) nach außen von einer Seite der flachen Trägerbasis erstrecken und wobei gegenüberliegende Endabschnitte der Hohlfasern an einer gegenüberliegenden Seite der flachen Trägerbasis offen sind.

33. Teppich nach Anspruch 27, wobei die Trägerbasis (72) in einer ringförmigen Konfiguration gebildet ist und sich die Schlaufen (70) der Hohlfasern nach außen von einer Seite der ringförmigen Trägerbasis erstrecken, und wobei die Endabschnitte der Hohlfasern (12) nach einer gegenüberliegenden Seite der ringförmigen Trägerbasis offen sind.

34. Teppich nach Anspruch 27, wobei die röhrenförmige Wand jeder der Hohlfasern (12) einen gestreckten inneren Hohlraum besitzt, der sich durch den gestreckten Hauptabschnitt erstreckt und gegenüberliegende Endabschnitt eine Flussverbindung zwischen den gegenüberliegenden Endabschnitten durch den Hauptabschnitt bereitstellen.

35. Teppich nach Anspruch 27, wobei die röhrenförmige Wand jeder der Hohlfasern (12) aus einem permeablen Material hergestellt ist.

36. Teppich nach Anspruch 27, wobei die röhrenförmige Wand jeder der Hohlfasern (12) aus einem thermoplastischen Materialien hergestellt ist.

## Revendications

1. Procédé de fabrication d'un tapis à membranes à fibres creuses, comprenant les étapes consistant à :
(a) disposer une multitude de fibres à membranes creuses (12) ;
(b) former une paire de bandes (22, 24) de matériau adhésif imperméable sur les fibres creuses dans une relation transversale avec celui-ci et dans une relation espacée l'une de l'autre de sorte que les parties principales des fibres creuses s'étendent entre les bandes espacées ;
(c) couper des parties sélectionnées desdites fibres creuses (12) adjacentes auxdites bandes espacées de manière à ouvrir lesdites fibres creuses en communication au niveau d'au moins une paire de parties formant extrémités opposées des fibres creuses supportées dans les bandes espacées ; et
(d) assembler les fibres creuses (12) et les bandes espacées (22, 24) dans un tapis à membranes à fibres creuses (44)
(i) en apportant et en attachant les bandes (22, 24) ensemble dans une relation côte à côte l'une par rapport à l'autre de manière à former une pluralité d'éléments de tapis élémentaires (56), chacun ayant un élément formant base oblong (68) formé par les bandes attachées et une multitude de boucles (70) formées par les parties principales (32) des fibres creuses s'étendant depuis les parties formant extrémités opposées de celles-ci supportées dans l'élément formant base (68), et
(ii) en positionnant ensemble lesdits éléments de tapis élémentaires (56) pour fournir le tapis à membranes à fibres creuses en attachant dans des relations côte à côte les éléments formant base (68) des éléments de tapis élémentaires adjacents (56) pour former une base de support (72) du tapis à membranes à fibres creuses, les boucles de fibres creuses (70) s'étendant vers l'extérieur depuis un coté de la base de support (72).

2. Procédé selon la revendication 1, dans lequel lesdites fibres creuses (12) sont disposées dans une relation côte à côte les unes par rapport aux autres.

3. Procédé selon la revendication 1, dans lequel lesdites fibres creuses (12) sont disposées dans une forme de textile.

4. Procédé selon la revendication 1, dans lequel lesdites fibres creuses (12) sont disposées dans une forme de textile tricoté dans laquelle lesdites fibres creuses se chevauchent et s'entrecroisent les unes avec les autres.

5. Procédé selon la revendication 1, dans lequel lesdites fibres creuses (12) sont disposées à partir d'un seul fil continu de ladite fibre creuse.

6. Procédé selon la revendication 1, dans lequel lesdites fibres creuses (12) sont disposées en mèches dans lesquelles les fibres creuses individuelles sont disposées dans une relation côte à côte les unes par rapport aux autres, et dans lequel lesdites mèches de fibres creuses sont également disposées dans une relation côte à côte les unes par rapport aux autres.

7. Procédé selon la revendication 1, dans lequel ladite étape consistant à couper les parties en excès opposées des fibres creuses (12) s'étendant au-delà des bandes (22, 24) est effectuée en lissant les parties formant arêtes des bandes avec les parties en excès des fibres creuses (12).

8. Procédé selon la revendication 1, dans lequel ladite étape consistant à apporter les bandes (22, 24) ensemble comprend le décalage des bandes dans des sens opposés l'une de l'autre le long de leur étendue longitudinale avant d'attacher les bandes ensemble dans la relation côte à côte.

9. Procédé selon la revendication 8, dans lequel ledit décalage des bandes (22, 24) dans le sens longitudinal l'une par rapport à l'autre courbe les fibres creuses (12) s'étendant entre les bandes de manière à fournir la multitude de boucles (70) qui se chevauchent mutuellement et s'étendant dans des plans disposés à de petits angles aigus par rapport aux étendues longitudinales des bandes.

10. Procédé selon la revendication 1, dans lequel ladite base de support du tapis à membranes à fibres creuses est prévue dans une configuration globalement plate et les boucles (70) de fibres creuses s'étendent vers l'extérieur depuis un côté de la base de support plate, les parties formant extrémités des fibres creuses (12) étant ouvertes au niveau d'un côté opposé de la base de support plate (72).

11. Procédé selon la revendication 1, dans lequel ladite base de support (72) du tapis à membranes à fibres creuses (12) est formée dans une configuration annulaire et les boucles (70) des fibres creuses (12) s'étendent vers l'extérieur depuis un extérieur de la base de support annulaire (72) avec les parties formant extrémités des fibres creuses étant ouvertes au niveau d'un intérieur de la base de support annulaire.

12. Procédé selon la revendication 1, comprenant en outre l'étape consistant à :
appliquer une paire d'éléments de renforcement oblongs (38, 40) à travers lesdites parties adjacentes sélectionnées desdites fibres creuses (12) dans une relation transversale par rapport à celles-ci et dans une relation espacée les unes par rapport aux autres avant de former ladite paire de bandes (22, 24) de matériau adhésif imperméable pour de ce fait enfermer les éléments de renforcement avec les parties adjacentes sélectionnées des fibres creuses par lesdites bandes de sorte que les éléments de renforcement s'étendent dans le sens longitudinal à travers les bandes respectives.

13. Procédé selon la revendication 12, dans lequel lesdits éléments de renforcement oblongs (38, 40) sont appliqués à travers lesdites parties adjacentes sélectionnées desdites fibres creuses en entrelaçant les éléments de renforcement entre les mèches desdites fibres creuses.

14. Procédé selon la revendication 1, comprenant en outre l'étape consistant à :
coordonner la disposition des fibres creuses (12) avec l'application des bandes (22, 24) pour fournir des segments de bandes sans fibres creuses et des espaces de pont entre les fibres creuses de sorte que ces segments de bandes définissent des moyens destinés à attacher le tapis à des éléments de support externe.

15. Procédé selon la revendication 14, dans lequel ladite application des bandes comprend les étapes consistant à :
fournir des intervalles épaissis des bandes à des endroits le long de celles-ci qui forment les segments du tapis résultant ; et
allonger les intervalles épaissis en réduisant l'épaisseur de ceux-ci pour ainsi provoquer l'allongement de ceux-ci pour fournir les segments.

16. Procédé selon la revendication 1, comprenant en outre l'étape consistant à :
profiler lesdites bandes (22, 24) en formant des éléments d'insertion mutuelle complémentaires (52, 54) sur des côtés opposés de celles-ci de sorte que les bandes peuvent être attachées les unes aux autres pour former l'élément de tapis élémentaire.

17. Procédé selon la revendication 16, dans lequel ladite étape consistant à rassembler les bandes (22, 24) comprend le rapprochement des éléments d'insertion mutuelle complémentaires respectifs (52, 54) les uns par rapport aux autres.

18. Procédé selon la revendication 16, dans lequel ladite étape consistant à rassembler les bandes (22, 24) comprend le décalage des bandes dans des sens opposés les unes des autres le long de leurs étendues longitudinales avant de coupler les éléments d'insertion mutuelle (52, 54) les unes par rapport aux autres.

19. Elément de tapis élémentaire destiné à être utilisé dans la formation d'un tapis à membranes à fibres creuses, ledit élément de tapis élémentaire comprenant :
(a) une paire de bandes (22, 24) de matériau adhésif imperméable étant positionnées dans le sens de la longueur adjacentes l'une par rapport à l'autre ;
(b) des moyens destinés à attacher lesdites bandes l'une à l'autre dans une relation côte à côte pour former un élément de base oblong (68) ; et
(c) une multitude de fibres à membranes creuses (12) chacune ayant une paroi tubulaire avec une paire de parties formant extrémités opposées espacées et une partie principale reliant entre elles lesdites parties formant extrémités opposées, lesdites parties formant extrémités opposées de chacune desdites fibres creuses étant supportées dans celles respectives desdites bandes et s'étendant depuis celles-ci à travers les surfaces desdites bandes disposées côte à côte l'une par rapport à l'autre et s'étendant sensiblement dans le même plan, lesdites parties principales oblongues desdites fibres creuses (12) étant courbées de manière à former une multitude de boucles (70) s'étendant depuis un côté dudit élément formant base oblong formé par lesdites bandes attachées.

20. Elément selon la revendication 19, dans lequel lesdites bandes (22, 24) ayant des étendues longitudinales sont attachées l'une à l'autre dans une relation décalée dans des sens opposées le long de leurs étendues longitudinales de sorte que lesdites parties formant extrémités opposées de chacune desdites fibres creuses (12) sont décalées l'une de l'autre dans lesdits sens opposés, amenant ladite multitude de boucles (70) à se chevaucher mutuellement et à s'étendre dans des plans disposés à de petits angles aigus par rapport aux étendues longitudinales des bandes.

21. Elément selon la revendication 19, dans lequel lesdites bandes (22, 24) ayant des étendues longitudinales sont rassemblées en les disposant dans le sens de la longueur avec leurs étendues longitudinales parallèles les unes aux autres, amenant ladite multitude de boucles (70) à s'étendre dans des plans individuels disposés globalement parallèles les uns aux autres et perpendiculaires aux étendues longitudinales desdites bandes (22, 24).

22. Elément selon la revendication 19, dans lequel lesdits moyens destinés à attacher comprennent des éléments d'insertion mutuelle complémentaires (52, 54) formés sur une paire de côtés opposés de chacune desdites bandes (22, 24) qui attachent de manière couplée lesdites bandes ensemble pour former ledit élément formant base (68) et en outre pour attacher de manière couplée les autres éléments formant base (68) d'éléments de tapis élémentaires positionnés de manière adjacente (56) audit élément formant base (68) d'un élément de tapis respectif (56) pour former un tapis à membranes à fibres creuses (12) à partir d'une pluralité d'éléments de tapis élémentaires (56).

23. Elément selon la revendication 19, comprenant en outre :
un élément de renforcement oblong (38, 40) enfermé dans et s'étendant dans le sens longitudinal à travers chacune desdites bandes (22, 24) formant ledit élément formant base (68) dudit élément de tapis élémentaire (56).

24. Elément selon la revendication 19, dans lequel ladite paroi tubulaire de chacune des fibres creuses (12) comprend un trou interne oblong s'étendant à travers ladite partie principale oblongue et lesdites parties formant extrémités opposées fournissant une communication de flux entre lesdites parties formant extrémités opposées à travers ladite partie principale.

25. Elément selon la revendication 19 dans lequel ladite paroi tubulaire de chacune des fibres creuses (12) est composée d'un matériau perméable.

26. Elément selon la revendication 19, dans lequel ladite paroi tubulaire de chacune desdites fibres creuses (12) est composée d'un matériau thermoplastique.

27. Tapis à membranes à fibres creuses, comprenant :
(a) une pluralité d'élément de tapis élémentaires (56), chaque élément comprenant :
(i) une paire de bandes (22, 24) de matériau adhésif imperméable étant positionnées dans le sens de la longueur adjacentes l'une par rapport à l'autre,
(ii) des moyens destinés à attacher lesdites bandes l'une à l'autre dans une relation côte à côte pour former un élément formant base oblong (68), et
(iii) une multitude de fibres à membranes creuses (12), chacune comprenant une paroi tubulaire avec une paire de parties d'extrémités opposées espacées et une partie principale reliant entre elles les parties formant extrémités opposées, lesdites parties formant extrémités opposées de chacune desdites fibres creuses étant supportées dans des respectives desdites bandes et s'étendant depuis celles-ci à travers les surfaces desdites bandes disposées côte à côte l'une par rapport à l'autre et s'étendant sensiblement dans le même plan, lesdites parties principales oblongues desdites fibres creuses étant courbées de manière à former une multitude de boucles (70) s'étendant d'un côté dudit élément formant base oblong formé par lesdites bandes attachées ; et
(b) des moyens destinés à attacher lesdits éléments formant base oblongs desdits éléments de tapis éléments l'un à l'autre dans une relation côte à côte pour former une base de support oblongue (72) d'un tapis à membranes à fibres creuses, lesdites boucles de fibres creuses (70) s'étendant vers l'extérieur depuis un côté de ladite base de support.

28. Tapis selon la revendication 27, dans lequel lesdites bandes (22, 24) de chacun desdits éléments de tapis élémentaires présentent des étendues longitudinales et lesdites bandes sont attachées l'une à l'autre dans une relation décalée dans des sens opposés le long de leurs étendues longitudinales de sorte que les parties formant extrémités opposées de chacune desdites fibres creuses sont décalées l'une de l'autre dans lesdits sens opposés, amenant ladite multitude de boucles (70) à se chevaucher mutuellement et à s'étendre dans des plans disposés à de petits angles aigus par rapport aux étendues longitudinales des bandes.

29. Tapis selon la revendication 27, dans lequel lesdites bandes (22, 24) de chacun desdites éléments de tapis élémentaires (56) présentent des étendues longitudinales et sont rassemblées en disposant lesdites bandes dans le sens de la longueur avec leurs étendues longitudinales parallèles les unes aux autres, amenant ladite multitude de boucles (70) à s'étendre dans des plans individuels disposés globalement parallèles les uns aux autres et perpendiculaires aux étendues longitudinales desdites bandes.

30. Tapis selon la revendication 27, dans lequel lesdits moyens destinés à attacher lesdites bandes (22, 24) de chaque élément l'une à l'autre et destinés à attacher lesdits éléments l'un à l'autre comprennent des éléments d'insertion mutuelle complémentaires (52, 54) formés sur une paire de côtés opposés de chacune desdites bandes de chacun desdits éléments pour attacher ensemble de manière couplée lesdites bandes pour former ledit élément formant base (68) de chacun desdits éléments et pour attacher ensemble de manière couplée lesdits éléments formant base de ceux positionnés de manière adjacente desdits éléments pour former ladite base de support (72) dudit tapis.

31. Tapis selon la revendication 27, comprenant en outre :
un élément de renforcement oblong (38, 40) enfermé dans et s'étendant longitudinalement à travers chacune desdites bandes (22, 24) formant ledit élément formant base (68) de chacun desdits éléments de tapis élémentaires (56).

32. Tapis selon la revendication 27, dans lequel ladite base de support (72) est formée dans une configuration globalement plate et lesdites boucles (70) desdites fibres creuses (12) s'étendent vers l'extérieur depuis un côté de ladite base de support plate, lesdites parties formant extrémités opposées desdites fibres creuses étant ouvertes au niveau d'un côté opposé de ladite base de support plate.

33. Tapis selon la revendication 27, dans lequel ladite base de support (72) est formée dans une configuration annulaire et lesdites boucles (70) desdites fibres creuses s'étendent vers l'extérieur depuis un côté de ladite base de support annulaire, lesdites parties formant extrémités desdites fibres creuses (12) étant ouvertes au niveau d'un côté opposé de ladite base de support annulaire.

34. Tapis selon la revendication 27 dans lequel ladite paroi tubulaire de chacune desdites fibres creuses (12) présente un trou interne oblong s'étendant à travers ladite partie principale oblongue et lesdites parties formant extrémités opposées fournissant une communication de flux entre lesdites parties formant extrémités opposées à travers ladite partie principale.

35. Tapis selon la revendication 27 dans lequel ladite paroi tubulaire de chacune des fibres creuses (12) est composée d'un matériau perméable.

36. Tapis selon la revendication 27 dans lequel ladite paroi tubulaire de chacune des fibres creuses (12) est composée d'un matériau thermoplastique.
